# EUROPEAN PATENT SPECIFICATION

(11) **EP 4 584 496 B1**
(45) Date of publication and mention of the grant of the patent: **05.08.2026**
(21) Application number: 23818562.3
(22) Date of filing: 15.09.2023
(51) Int. Cl.: F03B 13/26, F03B 3/12, F03B 17/06

(54) **BLADE ELEMENT COMPRISING CHANNEL AND VANE FOR USE IN OCEAN CURRENT TURBINE**
SCHAUFELELEMENT MIT KANAL UND SCHAUFEL ZUR VERWENDUNG IN EINER MEERESSTRÖMUNGSTURBINE
ÉLÉMENT DE PALE COMPRENANT UN CANAL ET UNE AUBE DESTINÉS À ÊTRE UTILISÉS DANS UNE TURBINE À COURANT OCÉANIQUE

(30) Priority: 16.09.2022 NO 20220990
(43) Date of publication of application: 16.07.2025
(73) Proprietor: Randsea AS, 3138 Skallestad (NO)
(72) Inventor: FAGERENG, Arill, 3138 Skallestad (NO)
(74) Representative: Acapo Onsagers AS
(86) International application number: PCT/NO2023/060048
(87) International publication number: WO 2024/058673

(56) References cited:
- DE-A1- 10 036 307
- DE-B3- 102019 007 452
- US-A- 4 684 316

## Description

The present invention relates to the blade elements of an ocean current turbine having a main frame with bow, continuously convex frame sides and a straight truncated or pointed aft section. The shape of the main frame is approximately drop-shaped in the horizontal plane. Along the continuous convex frame sides there are provided vane elements secured via rails, preferably on the outside of the main frame itself of the ocean current turbine, wherein the vane element comprises an inlet channel, arranged upstream of the ocean current, and a blade arranged in a gap opening between the inlet channel and the main body of the vane element itself. In which the main body preferably comprises a flat upstream surface, which is circular or rectangular, and with corresponding hemispherical or conical part towards a downstream end. The blade elements, which are arranged on endless rotation chains, are pushed backwards from bow and towards the aft section of the main frame by means of the ocean current. At the aft section, the blade element is rotated approx. 180 degrees and is pulled upwards towards the bow again, the pulling force then comes from the vane elements pushed backwards from the bow by the ocean current. When the blade element returns to the bow, the blade element is rotated approx. 180 degrees left, so that the inlet channel is again upstream and can be pulled backwards by the ocean current. The rotating chain runs around and engages with one or more drive wheels that drive one or more generators, preferably through one or more gears, so that the ocean current turbine converts the kinetic energy (kinetic energy) of the ocean current into electrical energy.

There is currently a great need for energy that does not cause any additional carbon emissions to the atmosphere. Wind power is a source where utilization increases with time, while water flow (ocean current, tidal current, wave current), which is a huge source of energy, is almost unused to date. Being able to generate electrical energy from the kinetic energy (kinetic energy) of the ocean current will be important in further reducing environmentally harmful emissions to the atmosphere. There are large ocean currents that contain enormous amounts, more or less constant, kinetic energy, such as for example, the Gulf Stream. The Gulf Stream maintains a more or less constant speed of up to 9 km/h in certain places, which may not seem like much, but taking into account that the Gulf Stream carries about 40 million cubic meters of water every second, then there will be great forces at work. The ability to convert such energy sources into electrical energy is the background of the invention.

### Mention of known technology

Ocean current turbine technology must be built to withstand the violent forces that can occur underwater. The conventional bottom-placed ocean current turbines, also known as sea mills, must also be far enough underwater that they do not get in the way of boat traffic and deep-sea fishing. At the same time, they must not be far from land, because the electricity must be transported to civilization via cables. If the turbines are in the middle of the ocean, long power cables must be made and a lot of energy will be lost during transport. All this makes the turbines very expensive, and greatly limits where the turbines can be placed.

The inventor already has two published inventions in the field, both of which comprise ocean current turbines located wholly or partly below the surface with transverse plates captured by the water current.

WO2017213518 (A1) is about an ocean current turbine that is sharply V-shaped with a tip against the current, two straight frame sides with linearly increasing distance based on the distance from the tip, and with a wide aft section. On the starboard and port sides of the V-shaped main frame, main chains with transverse plates run, which are captured by the water current. The main chain drives a wheel connected to a generator to convert kinetic energy into, for example, electrical energy. From the rear end at the widest point, the plates are rotated from transverse to longitudinal, and the main chain returns in a shielded space between the frame sides with the plates directed along the main chain.

WO2020046134 (A1) is a further development of the initial invention, where the ocean current turbine has now taken on a boat-like shape, with a bow section facing the water current and a broader midsection extending towards a narrower, straight transverse aft section. On the starboard and port sides, there are endless chains, each equipped with transverse plates that run from the bow section to the aft section, powered by the water current. At the aft section, there is a turning mechanism that turns the plates into a passive position, before they are returned by the endless chain back to the bow where they are again turned into an active position and moved afterwards by the ocean current.

DE102019007452 (B3) describes a bidirectional flow machine (1) which is designed either as a working machine or as a power machine (10, 11) and has a diffuser for a flow (F) that changes diametrically in direction.

### Purpose of the present invention

The present invention is generally aimed at solving at least one, but preferably several, of the problems existing with the prior technology. More particularly, it has been an purpose of the invention to develop an ocean current turbine with more efficient vane elements. It has also been a purpose to develop blade elements that can be placed in a row, with reduced turbulence for the next blade element. It is also an intention to develop a placement of the blade elements on the ocean current turbine itself so that they maximize the effectiveness of how the water current impacts the blade elements. It is also intended to develop an ocean current turbine that is bowed up against the water current and has a design that provides a good water flow rate along the sides of the ocean current turbine where the vane elements are positioned to be driven afterwards by the water current.

### Summary of the Invention

The invention is defined by the independent claim 1, wherein the invention is a blade element adapted for use in an ocean current turbine comprising the following features:
- An axially arranged inlet channel with a central axis designed to face upstream with an upstream channel opening in its operational state; and
- With at least one axially arranged vane, having an upstream vane opening arranged within a downstream channel opening.
- An axially arranged main body with an upstream surface, located within the downstream vane opening, and with a rotationally symmetric portion having one or more convex surfaces extending from the upstream surface and passing the downstream vane opening towards an axially arranged downstream end on the main body.

The present invention relates to the design of a blade element for use on an ocean current turbine so as to reduce turbulence after the blade element while maintaining the driving force (drag force). The invention also means that the reversing mechanism at the bow and aft section can only be a normal driving wheel, as the blade element naturally turns to its correct operating state by following the rotation of the endless chain in the bow and aft section connected to the driving wheels.

Further, inventive embodiments of the invention are set forth in the dependent claims.

### Description of Figures

Preferred embodiments of the invention will hereinafter be discussed in more detail with reference to the accompanying figures, wherein:
Figure 1 shows an embodiment of the invention in which an ocean current turbine 0 is fully equipped to stand in a water stream F and deliver renewable energy.
Figure 2 shows an embodiment of an ocean current turbine 0 seen from above, without mounted equipment as shown in Figure 1, where an embodiment is shown with the blade elements on the outside of the starboard and port side frame SS, BP.
Figure 3 a) and b) show an embodiment of a blade element 10.0 with a circular design of an upstream surface 13.1 designed for use in an ocean current turbine 1.0.
Figure 4 shows an embodiment of a blade element 10.0 with a circular design of an upstream surface 13.1, where it is indicated that the water current F attacks against the circular design of an upstream channel opening 11.1.
Figures 5a) and b) show an embodiment of a blade element 10.0 with rectangular configuration of an upstream surface 13.1 adapted for use in an ocean current turbine 1.0.
Figure 6 shows an embodiment of a blade element 10.0 with rectangular configuration of an upstream surface 13.1, where it is indicated that the water flow F is attacking an upstream channel opening 11.1 consisting of two vertical plates.
Figure 7 shows an embodiment of two venturi 30.0 ejectors arranged in a blade element 10.0 of a rectangular configuration
Figures 8 a), b) and c) show a software simulated turbulence situation of 3 embodiments of a blade element 10.0.
Figures 9a and 9b show a software simulated turbulence situation with 3 blade elements 10.0 arranged one after the other.

### Description of preferred embodiments of the invention

The present invention provides a blade element adapted for use in an ocean current turbine comprising the following features:
- An axially arranged inlet channel with a central axis designed to face upstream with an upstream channel opening in its operational state; and
- With at least one axially arranged vane, having an upstream vane opening arranged within a downstream channel opening.
- An axially arranged main body with an upstream surface, located within the downstream vane opening, and with a rotationally symmetric portion having one or more convex surfaces extending from the upstream surface and passing the downstream vane opening towards an axially arranged downstream end on the main body.

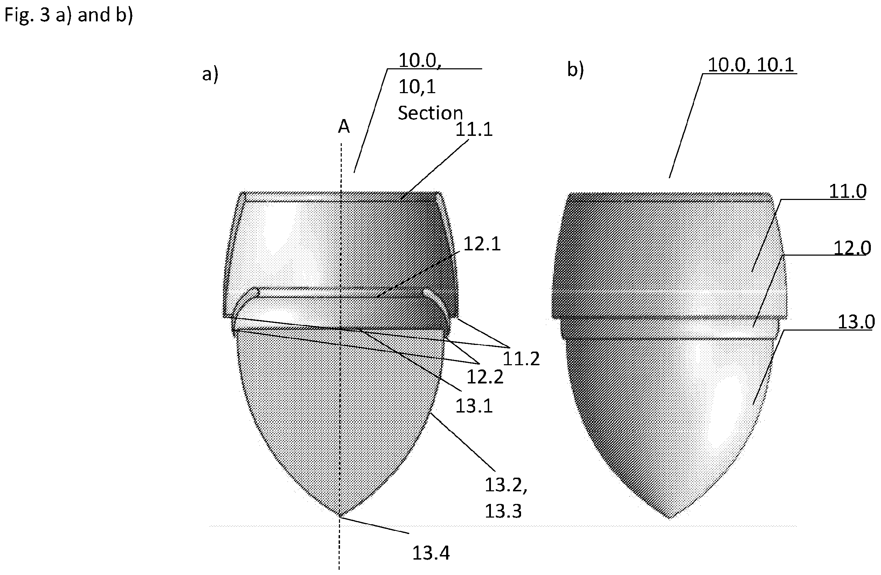

The term axially arranged shall be interpreted as shown in Figures 3 - 6 with a major axis A. The main axis A runs through the blade element so that the parts from which the blade element is constructed are arranged axially with the main axis A.

In an embodiment of the invention, where the one or more convex surfaces are straight and/or purely planar converging surfaces, even though such surfaces do not yield as good results as the one or more convex surfaces in the simulation model, it might appear differently in practice.

In an embodiment of the invention, where the main body is hollow, so that the upstream surface consists mainly of a body of water.

In an embodiment of the invention, the axially arranged inlet channel on the blade element is an axially arranged inlet sleeve, and the at least one axially arranged blade is a blade sleeve, and the axially arranged main body is a circular upstream surface.

In another embodiment of the invention, the axially arranged inlet channel of the blade element comprises at least two lateral surfaces which are arranged in pairs and symmetrically about the central axis and to the side of the main body of the blade element, and the axially arranged main body has a rectangular upstream surface.

In an embodiment of the invention, where the at least one vane has a cross-sectional shape resembling an airfoil profile, and where the cross-sectional shape is arranged with its convex main surface arranged outward in relation to the central axis, with its trailing edge positioned at the downstream blade opening.

In an embodiment of the invention, where the at least one vane is arranged with a gap opening towards the axially arranged main body. So that the Coanda effect is formed over the main body along the convex surface between the upstream surface towards the downstream end. This results in less turbulence and flow directed to the next blade element. This also results in a higher fluid velocity along the convex surface, which in turn leads to lower pressure perpendicular to the convex surface, creating a suction effect. Due to the geometry, this suction effect acts as a driving force on the blade element.

In an embodiment of the invention, the blade element has an overall length of between 5 and 25 meters, preferably between 10 and 20 meters, and more preferably between 12 and 18 meters.

In an embodiment of the invention, one or more venturi ejectors are axially arranged in the main body such that a venturi nozzle has an inlet in the upstream surface and a venturi diffuser has an outlet in the downstream end, and wherein the venturi intake sucks in air or water. The suction may be lateral to the central axis. It has been observed in the modelling that it gives a better effect when using one or more venturi ejectors in the blade element and we do not wish to speculate or give an explanation as to why it gives a better effect.

In an embodiment of the invention, the ocean current turbine that converts water flow energy comprises two or more blade elements, further comprising the following features:
- a main frame adapted to be wholly or partially immersed in a current of water in the sea or in a river,
- where the main frame comprises
- a bow portion adapted to face substantially the flow of water,
- starboard and port endless rotation chains with blade elements arranged to be caught at the bow portion and driven rearward by the water current,
- where the rotation chain runs about and in driving engagement with one or more driven wheels driving a generator, and
- port and starboard side frames that are continuously convex and that extend from the bow section and rear to
- a transverse or pointed aft section narrower than the greatest distance between port and starboard side frames,
- where each of the endless rotation chains is provided with the blade elements, arranged to run along the port and starboard side frames.

In a further embodiment of the invention, where the ocean current turbine has the rotation chains supported by a starboard and port rotation rail on the respective starboard and port side of the main frame, so that the blade elements are propelled backward by the water current alongside the main frame.

In an embodiment of the invention, where the ocean current turbine has the main frame that includes at least one vertical port bow blade and at least one vertical starboard blade designed with airfoil profiles, and where the cross-sectional shape is arranged with its convex main surface facing outward from the bow section and with its trailing edge positioned downstream toward the respective starboard and port endless rotation chain.

In an embodiment of the invention, the ocean current turbine has at least three blade elements arranged in a row, one after the other, on the starboard and on the port endless rotation chain, respectively.

In an embodiment of the invention, the offshore power turbine generators generate hydrogen, so that the energy converted to hydrogen can be stored in tanks and retrieved by ships for transportation to shore.

In an embodiment of the invention, where the blade element can be ballasted (change its weight) in water, either manually or automatically, allowing for the adjustment of the weight of the blade element. It is advantageous to be able to reduce the vertical forces transmitted to the starboard and port rotary rails of the ocean current turbine.

### Detailed description of embodiments of the invention

Preferred embodiments of the invention will hereinafter be discussed in more detail with reference to the accompanying figures, wherein:

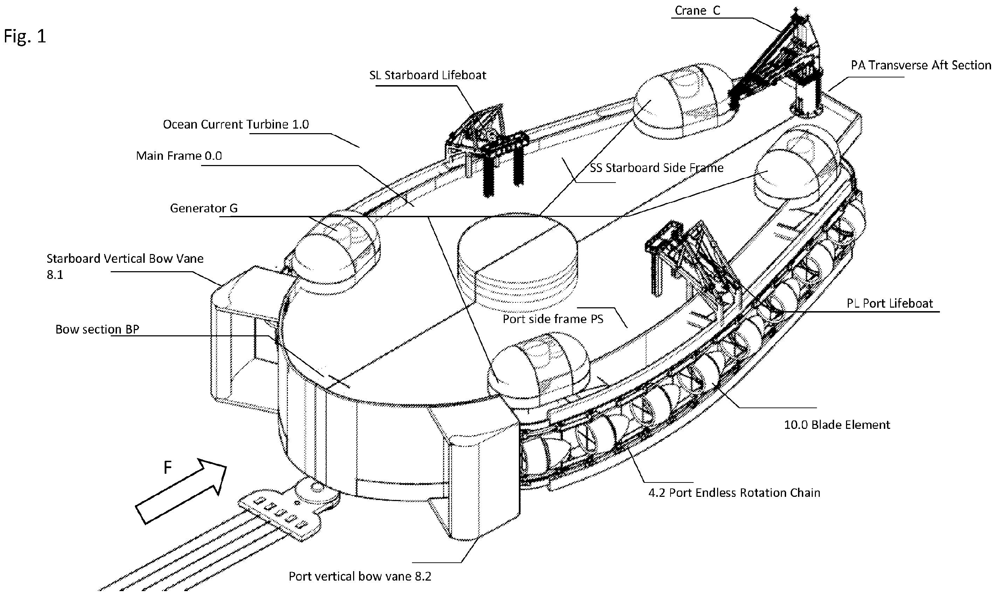

Figure 1 shows an embodiment of the invention in which an ocean current turbine (1.0) comprises a main frame (0.0) comprising substantially a starboard and a port side frame (SS, BS). The main frame (0.0) further comprises a bow portion (BP) and a transverse aft section (PA). Not shown in the Figure, but the aft section may also be pointed. The figure shows the main frame with equipment such as a crane (K) and a port lifeboat (BL) and a starboard lifeboat (SL), showing that this comprises a semi-submersible ocean current turbine (0.0). An ocean current turbine (1.0) may also be fully submersible. Furthermore, the figure shows a way in which the ocean current turbine (0.0) is stored in a storage device in the bow section (BP), with a swivel in the horizontal plane, so that the bow section (BP) will be adjusted towards the direction of the water flow (F) towards the ocean current turbine (1.0). The figure, which is a bird 's-eye view viewed obliquely from the front towards the port side of the ocean current turbine, further shows the blade elements arranged on the port endless rotation chain. At the forefront, that is, at the bow section (BP), it appears
two vertical bow vanes, one starboard and one port, (8.1, 8.2), are positioned at the beginning of the endless rotation chains (4.1, 4.2) on the respective starboard and port sides of the ocean current turbine. On the main deck of the ocean current turbine (1.0), where the crane (K) and starboard and port lifeboats (SL, BL) are mounted, there are also four generators (G) shown, which are connected via drive wheels that engage with the endless rotation chains (4.1, 4.2).

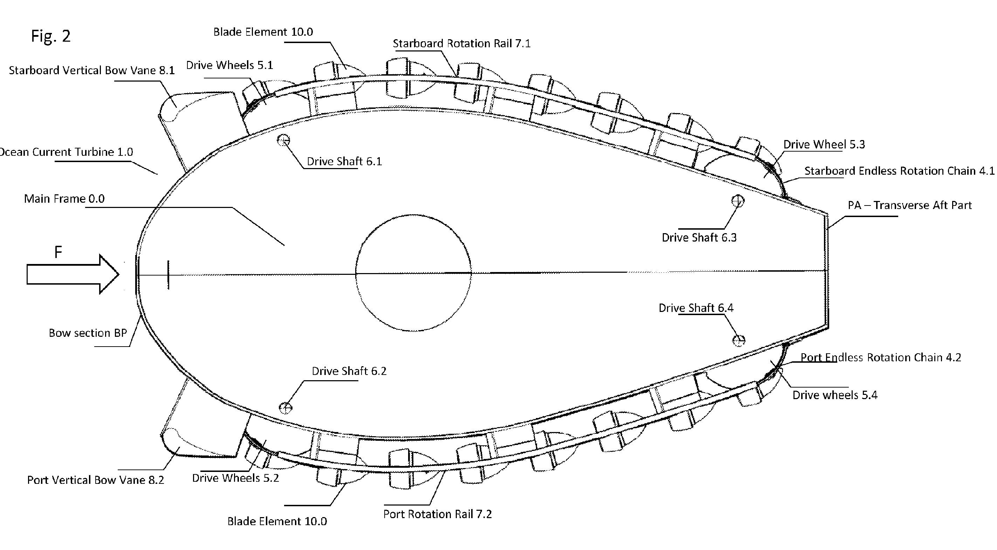

Figure 2 shows an embodiment of the invention in which an ocean current turbine (1.0) is shown from above and in which a bow portion is directed towards a water flow (F) with a transverse aft section (PA) at the opposite end. The figure further shows how the port and starboard vertical bow vanes (8.1, 8.2) are arranged ahead of the endless rotation chains (4.1, 4.2) on the starboard and port sides, respectively, and how the endless rotation chains (4.1, 4.2) are provided with blade elements (10.0) and further arranged around and engage the drive wheels (5.1, 5.2, 5.3, 5.4) so that the drive shafts (6.1, 6.2, 6.3, 6.4) can further drive the generator (G), as shown in Figure 1, directly or via one or more gears.

Figures 3 a and 3 b show an embodiment of the invention, wherein Figure a) shows a longitudinal section of the blade element (10.0) and Figure b) shows the blade element (10.0) comprising an axially arranged inlet channel (11.0), an axially arranged vane (12.0) and an axially arranged main body (13.0). Figure 3 a showing an embodiment of the blade element section, comprising a longitudinal axis (A), an upstream channel opening (11.1) as an upstream sleeve opening, a downstream channel opening (11.2) as a downstream sleeve opening, an upstream vane opening (12.1), a downstream vane opening (12.2), an upstream surface (13.1) as a circular embodiment, a rotationally symmetrical section (13.2), a convex surface (13.3) and an axially arranged downstream end (13.4). Figure 3 a shows an embodiment in which the upstream vane opening (12.1) is arranged with the downstream channel opening (11.2) and further that the downstream channel opening (11.2) forms a gap opening between the axially arranged inlet channel (11.0) and the axially arranged vane (12.0). Figures 3 a and 3 b show an embodiment of the invention comprising the upstream surface (13.1) having a circular configuration. The rotationally symmetrical section (13.2) will have a convex surface (13.3) formed as a cone with a terminating axially arranged downstream end (13.4). It is not apparent from Figures 3 a and 3 b how the axially arranged inlet channel (11.0), the axially arranged vane (12.0) and the axially arranged main body (13.0) are interconnected. The interconnection depends on the type of material the blade element (10.0) is made of, and if, for example, it is plastic-molded, it may be necessary to use more stiffeners and brackets than if it is designed in aluminium or steel. Carbon fiber or titanium may be other relevant material choices, which will require suitable adaptations of stiffeners and brackets based on geometry and calculations. It is possibly that the three elements,
1. the axially arranged inlet channel (11.0),
2. the axially arranged vane (12.0)
3. the axially arranged main body (13.0)
in the blade element (10.0) are assembled using at least two, preferably four brackets in the openings between 1 and 2, and between 2 and 3. It is also possible that the upstream channel opening (11.1) has one or more vertical and horizontal stiffeners. The same can be considered for the upstream vane opening (12.1), which may have one or more vertical and horizontal stiffeners. The axially arranged main body (13.0) may also be hollow, such that the upstream surface (13.1) consists of substantially a body of water (not shown in the figure).

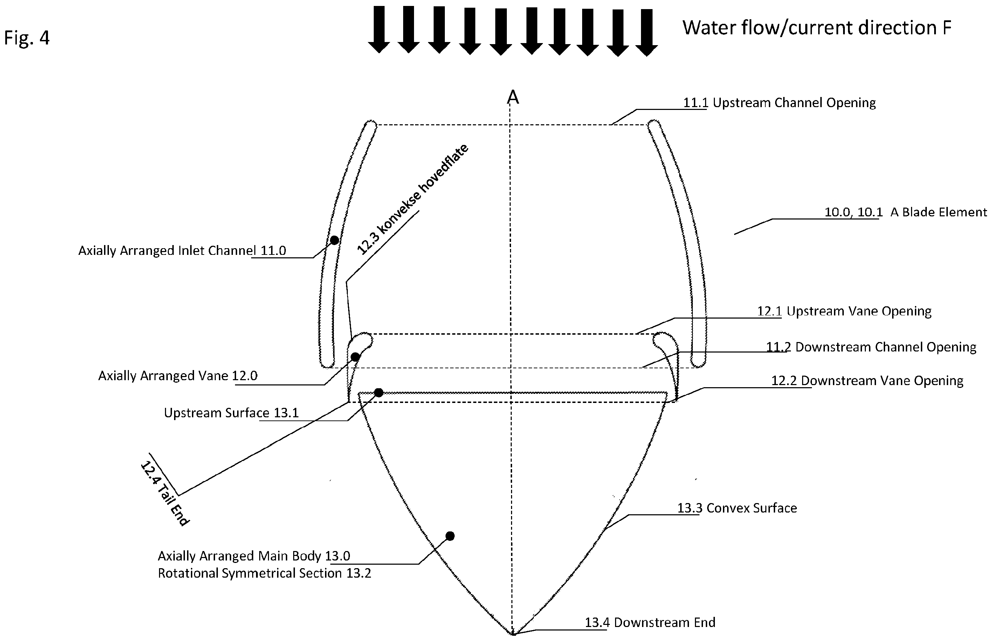

Figure 4 shows an embodiment of the invention, blade element (10), in a cross-section against a water current direction (F). The figure shows an axially arranged inlet channel (11.0), as an axially arranged inlet sleeve, with an upstream channel opening (11.1) as an upstream sleeve opening, and a downstream channel opening (11.2) as a downstream sleeve opening. The figure further shows an axially arranged vane (12.0), which is one shaped as a ring/sleeve (not evident from the figure, but if the inlet channel is a sleeve, then the vane will also be circular), provided with its upstream vane opening (12.1) inside the downstream channel opening (11.2) and with its downstream vane opening (12.2) located outside the downstream channel opening (11.2), where a gap opening is provided between the axially arranged inlet channel (11.0) and the axially arranged vane (12.0), so that part of the water flow (F) can flow out between the downstream channel opening (11.2) and the axially arranged vane (12.0) for the three main elements, blade element (10.0, 10.1), overlaps the axially arranged vane (12.0), which in turn overlaps the axially arranged main body (13.0). The figure shows an embodiment of the axially arranged vane (12.0) with a convex main surface (12.3) pointing outwardly from a longitudinal axis (A) and towards the axially arranged inlet channel (11.0) and wherein the axially arranged vane has a tail end (12.4) so that the axially arranged vane (12.0) has a cross-sectional profile like an airfoil. Furthermore, the figure shows an axially arranged main body (13.0) with an upstream surface (13.1), which here is circular, and which is arranged within the downstream vane opening (12.2), so that a gap is formed between the axially arranged vane (12.0) and the axially arranged main body (13.0) in order for part of the water flow (F) to flow through. The figure shows the axially arranged main body (13.0) designed with a convex surface (13.3) extending from the upstream surface (13.1) to an axially arranged downstream end (13.4). Further, the figure shows the axially arranged main body (13.0) as a rotationally symmetrical section (13.2), and in this embodiment with circular upstream surface (13.1).

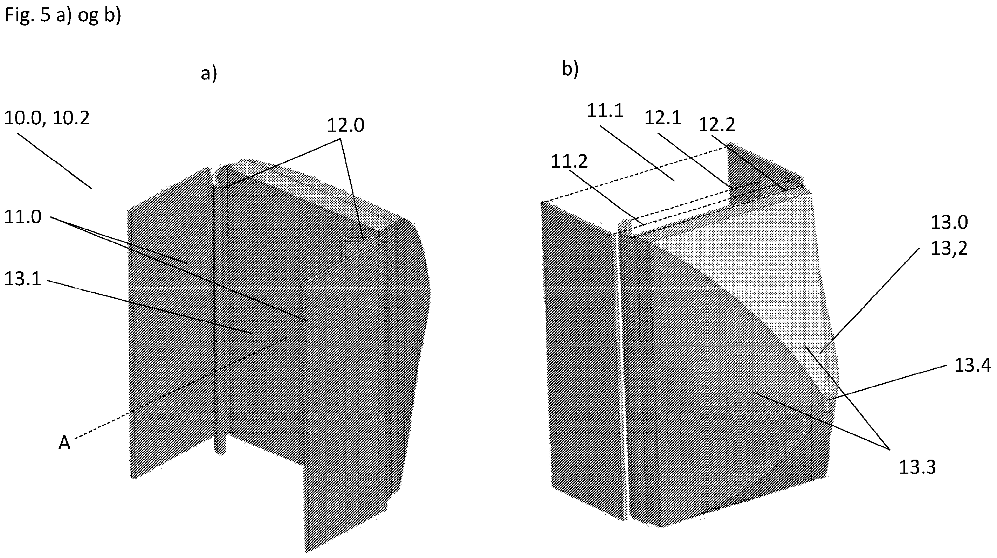

Figures 5 a) and b) show an embodiment of the invention, wherein Figure a) shows the blade element (10.0) viewed obliquely from the front and Figure b) shows the blade element (10.0) obliquely from the rear comprising an axially arranged inlet channel (11.0), two axially arranged vanes (12.0) and an axially arranged main body (13.0).

Figure 5a) showing an embodiment of the blade element (10.0), comprising a longitudinal axis (A), an axially arranged inlet channel (11.0) comprising two axially arranged plates, an upstream surface (13.1).

Figures 5a) and b) show an embodiment of the invention comprising the upstream surface (13.1) having a rectangular configuration. The rotationally symmetrical section (13.2) will have 4 convex surfaces (13.3) formed as a convex pyramid with a terminating axially arranged downstream end (13.4). It is not apparent from Figures 5a) and 5b) how the axially arranged inlet channel (11.0), the axially arranged vane (12.0) and the axially arranged main body (13.0) are interconnected.

The interconnection depends on the type of material the blade element (10.0) is made of, and if, for example, it is plastic-molded, it may be necessary to use more stiffeners and brackets than if it is designed in aluminium or steel. Carbon fiber or titanium may be other relevant material choices, which will require suitable adaptations of stiffeners and brackets based on geometry and calculations. It is possibly that the three elements,
1. the axially arranged inlet channel (11.0),
2. the axially arranged vane (12.0)
3. the axially arranged main body (13.0)
in the blade element (10.0) are assembled using at least two, preferably four brackets in the openings between 1 and 2, and between 2 and 3. It is also possible that the upstream channel opening (11.1) has one or more vertical and horizontal stiffeners. The same can be considered for the upstream vane opening (12.1), which may have one or more vertical and horizontal stiffeners. The axially arranged main body (13.0) may also be hollow, such that the upstream surface (13.1) consists of substantially a body of water (not shown in the figure).

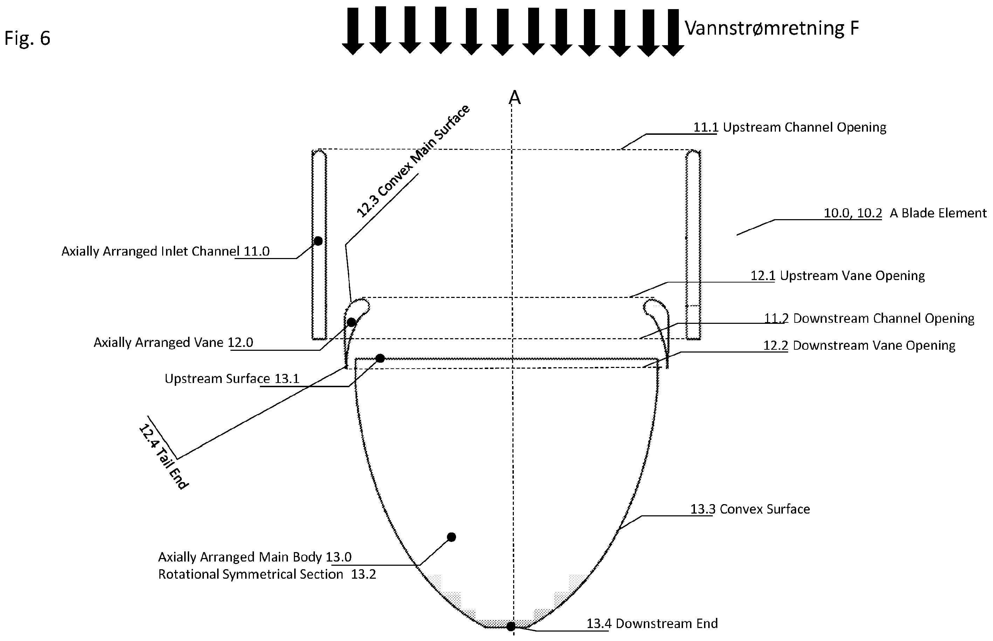

Figure 6 shows an embodiment of the invention, blade element (10), in a cross-section against a water current direction (F). The figure shows an axially arranged inlet channel (11.0), consisting of two axially arranged plates (which may also be of curved design, not shown
on the figure), with an upstream channel opening (11.1), and a downstream channel opening (11.2). The figure further shows an axially arranged vane (12.0), which comprises two vertical axially arranged vane (12.0) arranged on either side of an axially arranged main body (13.0), arranged with its upstream vane opening (12.1) inside the downstream channel opening (11.2) and with its downstream vane opening (12.2) arranged outside the downstream channel opening (11.2), where a gap opening is provided between the axially arranged inlet channel (11.0) and the axially arranged vane (12.0), so that part of the water flow (F) can flow out between the downstream channel opening (11.2) and the axially arranged vane (12.0). The figure shows an embodiment of the axially arranged vane (12.0) with a convex main surface (12.3) pointing outwardly from a longitudinal axis (A) and towards the axially arranged inlet channel (11.0) and wherein the axially arranged vane has a tail end (12.4) so that the axially arranged vane (12.0) has a cross-sectional profile like an airfoil. Further, the figure shows an axially arranged main body (13.0) having an upstream surface (13.1), which is rectangular in nature, and which is arranged within the downstream vane opening (12.2) to form a gap between the axially arranged vane (12.0) and the axially arranged main body (13.0) for portions of the water flow (F) to flow therethrough. The figure shows the axially arranged main body (13.0) formed with four convex surfaces (13.3) extending from the upstream surface (13.1) to an axially arranged downstream end (13.4). Further, the figure shows the axially arranged main body (13.0) as a rotationally symmetrical section (13.2), and in this embodiment with rectangular upstream surface (13.1).

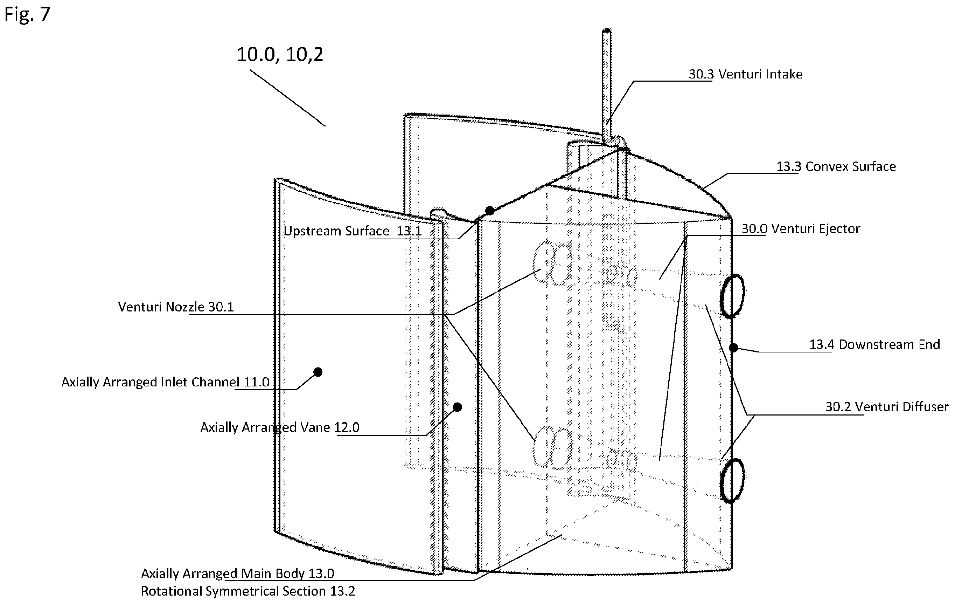

Figure 7 shows an embodiment of the invention with a blade element(10.0) configured as a rectangular blade element (10.2), wherein an axially arranged main body (13.0) is provided with two venturi ejectors (30.0) comprising venturi nozzles (30.1) arranged upstream and venturi diffusers (30.2) arranged downstream, and wherein a venturi intake (30.3) is arranged from the venturi ejectors (30.0) upward to above the water surface for air intake. The venturi intake (30.3) can also be arranged
to draw in water from the surroundings around the blade element (10.0). The figure further shows that the venturi nozzles (30.1) have inlets at an upstream surface (13.1) and the venturi diffusers have outlets at an axially arranged downstream end (13.4). The figure also shows an embodiment of the axially arranged main body (13.0) with two convex surfaces (13.3) and two straight surfaces extending from the upstream surface (13.1), which is rectangular, to an axially arranged downstream end (13.4). The figure also shows an axially arranged inlet channel (11.0) comprising two plates and two axially arranged vanes (12.0) vertically disposed on either side of the axially arranged main body (13.0), in a slot opening between the axially arranged inlet channel (11.0), consisting of two plates, and the axially arranged main body (13.0).

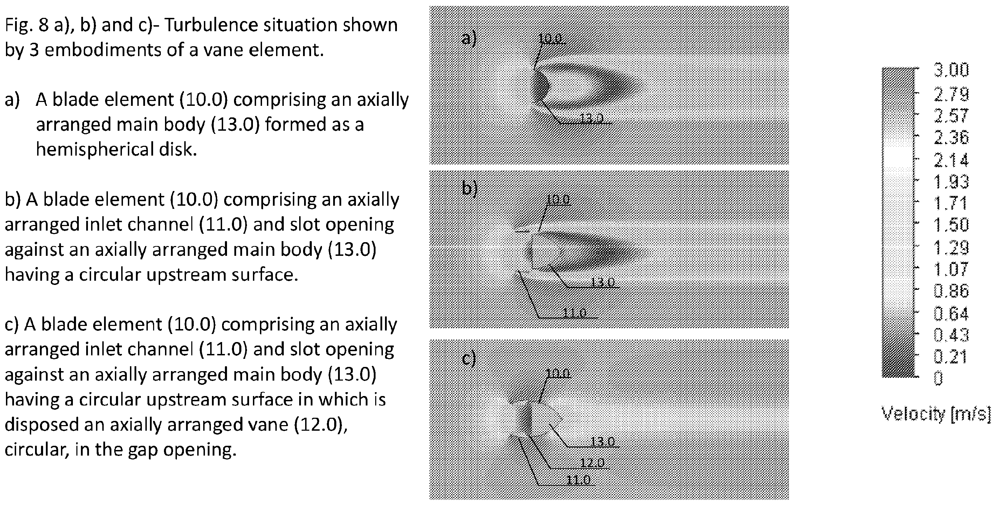

Figures 8 a), 8 b) and 8 c) show three different embodiments of the blade element (10.0) and how the turbulence situation becomes in a fluid flow directed against them. Figure 8 (a) shows a blade element (10.0) comprising aa axially arranged main body (13.0) having a hemispherical disk configuration. The figure shows stagnant fluid on the front of the axially arranged main body (13.0), more concretely inside the disk, giving the blade element itself (10.0) a good drag force. The figure also shows that there is a significant amount of turbulence behind the axially arranged main body (13.0). Turbulence behind the axially arranged main body (13.0) is unfavourable and results in less fluid flow to the next blade element (10.0), which is disposed in a series of blade elements (10.0) one after the other on an endless chain of an ocean current turbine.

Figure 8b) shows a blade element (10.0) comprising an axially arranged main body (13.0) with an axially arranged inlet channel (11.0), where there is a gap opening between the axially arranged inlet channel (11.0) and the axially arranged main body (13.0). The figure shows less stagnant fluid than in Figure 8a) on the front of the axially arranged main body (13.0), indicating less drag force. The figure also shows less turbulence than 8a) behind the axially arranged main body (13.0), which gives an increased fluid flow to the next blade element (10.0), which is arranged in a row of blade elements (10.0) after
each other on an endless chain on an ocean current turbine.

Figure 8c) shows a blade element (10.0) for purposes of the invention comprising an axially arranged main body (13.0) with an axially arranged inlet channel (11.0) and an axially arranged vane channel (12.0), wherein there is a gap between the axially arranged inlet channel (11.0) and the axially arranged vane channel (12.0), and that there is a gap between the axially arranged vane channel (12.0) and the axially arranged main body (13.0). The figure shows more stagnant fluid on the front side of the axially arranged main body (13.0) compared to the previous Figures 8a) and 8b), which indicates greater drag force. The figure also shows less turbulence than the preceding Figures 8a) and 8b) behind the axially arranged main body (13.0), which provide an increased fluid flow to the next blade element (10.0), which is arranged in a series of blade elements (10.0) one after the other on an endless chain of an ocean current turbine.

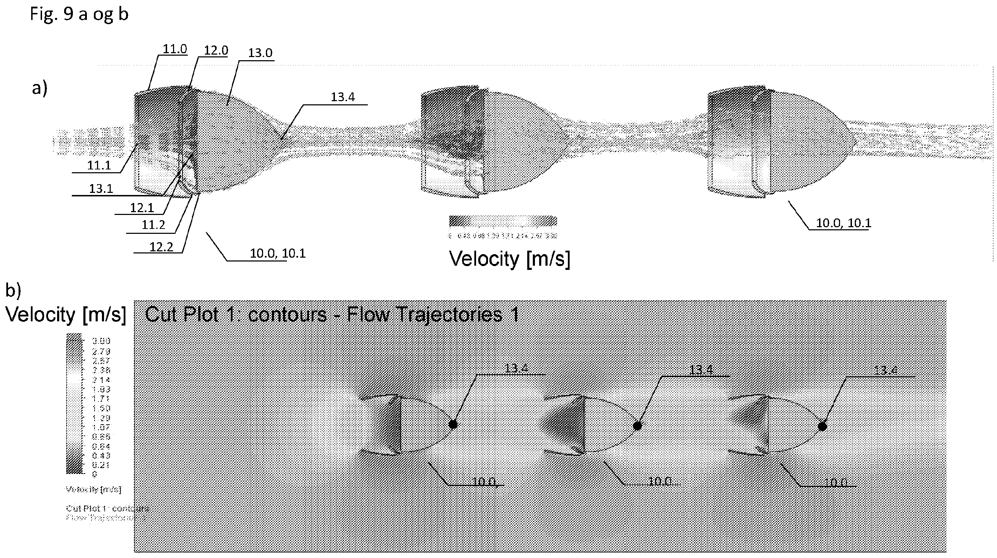

Figures 9a) and 9b) show an embodiment of the invention where three blade elements (10.0, 10.1) are simulated in a row in the face of a fluid flow. Figure 9a) shows three blade elements (10.0), each of which comprises an upstream channel opening (11.1) and wherein a fluid flow enters an axially arranged inlet channel (11.0), and wherein portions of the fluid flow continue into an upstream vane opening (12.1) and further through an axially arranged vane (12.0) until the fluid flow impinges on an upstream surface (13.1), and is discharged through a slot opening between the axially arranged vane (12.0) and the upstream surface (13.1) of an axially arranged main body (13.0). The portion of the fluid flow that does not pass through the axially arranged vane (12.0) is discharged through a slot opening between the axially arranged inlet channel (11.0) and the axially arranged vane (12.0). The figure further shows a model of the fluid flow that attains a higher velocity around and past the axially arranged main body (13.0) compared to the front of the axially arranged main body (13.0). The fluid flow follows
the axially arranged main body (13.0) backward toward an axially arranged downstream end (13.4) before it departs from the surface of the axially arranged main body (13.0) and continues towards the next blade element (10.0) in the row.

Figure 9b) shows a plot diagram of a fluid flow moving towards and around the blade elements (10.0) arranged in a row after each other, for example, on an endless chain installed on an ocean current turbine. The figure shows how the fluid flow increases in velocity around the blade elements (10.0) and indicates minimal stagnant water at the axially arranged downstream end (13.4). The figure shows quieter fluid flow within the axially arranged inlet channel (11.0), the axially arranged vane (12.0) and in front of the upstream face (13.1) than the surroundings.

### Reference table

| Note: | Name: | Description: |
|---|---|---|
| A | Longitudinal axis | Main axis through the blade element |
| G | Generator | |
| PB | Bow Section | |
| PS | Portside Frame | |
| SS | Starboard Side Frame | |
| PA | Transverse or Pointed Aft Section | The figures show a transverse aft section, but it can also be terminated at a pointed end. |
| F | Water flow direction | |
| 0.0 | Main Frame | The actual hull of the ocean current turbine. |
| 1.0 | Ocean Current Turbine | |
| 4.1 | Starboard Endless Rotation Chains | |
| 4.2 | Port Endless Rotation Chains | |
| 5.1-4 | Drive Wheels (at least two hollow per endless rotation chain) | The wheels are connected to the endless rotation chains and engage the drive shaft which drives the generator either directly or via any kind of gear. |
| 6.1-4 | Drive Shaft (at least one per drive wheel) | Drive shaft driven by the drive wheels and connected to one or more generators either directly or indirectly via gear. |
| 7.1 | Starboard Rotation Rail | A rail, functioning as a bracket, that holds the endless rotation chain from the side of the main frame. The rail is supported in the side frame. |
| 7.2 | Port Rotation Rail | -"- |
| 8.1 | Starboard Vertical Bow Vane | |
| 8.2 | Port Vertical Bow Vane | |
| 10.0 | Blade Element | |
| 10.1 | Circular Blade Element | Blade element with upstream surface (13.1) that is circular |
| 10.2 | Rectangular Blade Element | Blade element with upstream surface (13.1) that is rectangular |
| 11.0 | Axially Arranged Inlet Channel | |
| 11.1 | Upstream Channel Opening | |
| 11.2 | Downstream Channel Opening | |
| 12.0 | Axially Arranged Vane | |
| 12.1 | Upstream Vane Opening | |
| 12.2 | Downstream Vane Opening | |
| 12.3 | Convex Main Surface | Convex main surface, as on an airfoil profile. |
| 12.4 | Tail End | Tail end as on an airfoil profile. |
| 13.0 | Axially Arranged Main Body | |
| 13.1 | Upstream Surface | |
| 13.2 | Rotational Symmetrical Section | |
| 13.3 | Convex Surface(s) | |
| 13.4 | Axially Arranged Downstream End | |
| 30.0 | Venturi Ejector | |
| 30.1 | Venturi Nozzle | |
| 30.2 | Venturi Diffuser | |
| 30.3 | Venturi Intake | |
| 30.4 | | |

## Claims

1. An ocean current blade (10) comprising the following features:
- an axially arranged inlet channel (11.0) having a central axis (A) and arranged to face upstream with an upstream channel opening (11.1) in its operating state, and
- with at least one axially arranged vane (12.0), with an upstream vane opening (12.1) arranged within a downstream channel opening (11.2),
- an axially arranged main body (13.0) having an upstream surface (13.1), arranged within a downstream vane opening (12.2), and having a rotationally symmetrical section (13.2) having one or more convex surfaces (13.3) extending from the upstream surface (13.1) beyond the downstream vane opening (12.2) and toward an axially arranged downstream end (13.4) of the axially arranged main body (13.0), **characterized in that** the ocean current blade is arranged for use in an ocean current turbine (1).

2. The ocean current blade (10) according to claim 1 comprising the following features;
- where the axially arranged inlet channel (11.0) comprises an axially arranged inlet channel, and where the at least one axially arranged vane (12.0) comprises a vane sleeve, and where the axially arranged main body (13.0) comprises a circular upstream surface.

3. The ocean current blade (10) according to claim 1 comprising the following features;
- wherein the axially arranged inlet channel (11.0) comprises at least two side surfaces arranged in pairs symmetrically about the central axis (A) and to the side of the axially arranged main body (13.0), and wherein the axially arranged main body (13.0) comprises a rectangular upstream surface.

4. The ocean current blade (10) according to any one of claims 1, 2 or 3, wherein the at least one axially arranged vane (12.0) has a cross-sectional shape like an airfoil, and the cross-sectional shape is arranged with its convex main surface (12.3) arranged outwardly with respect to the central axis (A) and with its tail end (12.4) arranged at the downstream vane opening (12.2).

5. The ocean current blade (10) according to any one of the preceding claims, wherein the at least one axially arranged vane (12.0) is arranged with a slot opening against the axially arranged main body (13.0).

6. The ocean current blade (10) according to any one of the preceding claims, wherein one or more venturi ejectors (30.0) are axially arranged in the main body (13.0), such that a venturi nozzle (30.1) has an inlet in the upstream surface (13.1) and a venturi diffuser (30.2) has an outlet in the axially arranged downstream end (13.4), and wherein the venturi intake (30.3) draws in air or water.

7. An ocean current turbine (1) for converting the energy of water currents, comprising two or more ocean current blades (10.0) according to one of claims 1-6, further comprising the following features:
- a main frame (0.0) arranged to be partially or completely submerged in a water flow (F) in the sea or in a river,
- where the main frame (0.0) comprises
- a bow section (PB) adapted to face directly against the flow of water (F),
- starboard and port endless rotation chains (4.1, 4.2) with ocean current blades (10) arranged to be caught at the bow section (PB) and driven rearward by the water flow (F),
- in which the rotation chain (4) revolves and drives in engagement with one or more driven wheels (5) driving a generator (G), and
- port and starboard side frames (PS, SS) which are continuously convex and which extend from the bow section (PB) and rear to
- a transverse or pointed aft section (PA) at least narrower than the maximum distance between port and starboard side frames (PS, SS),
- where each of the endless rotation chains (4.1, 4.2) is provided with the ocean current blades (10), adapted to run along the port and starboard side frames (PS, SS).

8. The ocean current turbine (1) according to claim 7, wherein the endless rotation chains (4.1, 4.2) are supported by a starboard and port rotation rail (5.1, 5.2) on the starboard and port side of the main frame (0), such that the ocean current blades (10.0) are driven backward by the water flow (F) alongside the main frame (0.0).

9. The ocean current turbine according to any one of claims 7-8, wherein the main frame (0.0) comprises at least one vertical port bow vane (8.1) and at least one vertical starboard bow vane (8.2) arranged with airfoil profiles, and where the cross-sectional shape is arranged with its convex main surface outward from the bow section (PB) and its trailing end arranged downstream toward the respective starboard and port endless rotation chains (4.1, 4.2).

10. The ocean current turbine (1) according to any one of claims 7, 8 or 9, wherein there are at least 3 ocean current blades (10) in a row on each of the starboard and on the port endless rotation chains (4.1, 4.2).

## Patentansprüche

1. Schaufelelement für eine Meeresströmungsturbine (10) mit den folgenden Merkmalen: ein axial angeordneter Einlasskanal (11.0) mit einer Mittelachse (A), der in seinem Betriebszustand mit einer stromaufwärtigen Kanalöffnung (11.1) stromaufwärts ausgerichtet ist, und mindestens eine axial angeordnete Leitschaufel (12.0) mit einer stromaufwärtigen Leitschaufelöffnung (12.1), die innerhalb einer stromabwärtigen Kanalöffnung (11.2) angeordnet ist, ein axial angeordneter Hauptkörper (13.0) mit einer stromaufwärtigen Oberfläche (13.1), die innerhalb einer stromabwärtigen Leitschaufelöffnung (12.2) angeordnet ist, und mit einem rotationssymmetrischen Abschnitt (13.2) mit einer oder mehreren konvexen Oberflächen (13.3), die sich von der stromaufwärtigen Oberfläche (13.1) über die stromabwärtige Leitschaufelöffnung (12.2) hinaus bis zu einem axial angeordneten stromabwärtigen Ende (13.4) des axial angeordneten Hauptkörpers (13.0) erstrecken, **dadurch gekennzeichnet, dass** das Schaufelelement zur Verwendung in einer Meeresströmungsturbine (1) vorgesehen ist.

2. Schaufelelement für eine Meeresströmungsturbine (10) nach Anspruch 1 mit den folgenden Merkmalen; wobei der axial angeordnete Einlasskanal (11.0) eine axial angeordnete Einlasshülse umfasst, und wobei die mindestens eine axial angeordnete Leitschaufel (12.0) eine Leitschaufelhülse umfasst, und wobei der axial angeordnete Hauptkörper (13.0) eine kreisförmige stromaufwärtige Oberfläche umfasst.

3. Schaufelelement für eine Meeresströmungsturbine (10) nach Anspruch 1 mit den folgenden Merkmalen; wobei der axial angeordnete Einlasskanal (11.0) mindestens zwei Seitenflächen umfasst, die paarweise symmetrisch bezüglich der Mittelachse (A) und seitlich des axial angeordneten Hauptkörpers (13.0) angeordnet sind, und wobei der axial angeordnete Hauptkörper (13.0) eine rechteckige stromaufwärtige Oberfläche umfasst.

4. Schaufelelement für eine Meeresströmungsturbine (10) nach einem der Ansprüche 1, 2 oder 3, wobei die mindestens eine axial angeordnete Leitschaufel (12.0) eine Querschnittsform ähnlich einem Tragflächenprofil aufweist, und wobei die Querschnittsform mit ihrer konvexen Hauptfläche (12.3) nach außen relativ zur Mittelachse (A) angeordnet ist und mit ihrem Hinterende (12.4) an der stromabwärtigen Leitschaufelöffnung (12.2) angeordnet ist.

5. Schaufelelement für eine Meeresströmungsturbine (10) nach einem der vorhergehenden Ansprüche, wobei die mindestens eine axial angeordnete Leitschaufel (12.0) mit einer Spaltöffnung gegenüber dem axial angeordneten Hauptkörper (13.0) angeordnet ist.

6. Schaufelelement für eine Meeresströmungsturbine (10) nach einem der vorhergehenden Ansprüche, wobei ein oder mehrere Venturi-Ejektoren (30.0) axial im Hauptkörper (13.0) angeordnet sind, derart, dass eine Venturi-Düse (30.1) einen Einlass in der stromaufwärtigen Oberfläche (13.1) aufweist und ein Venturi-Diffusor (30.2) einen Auslass im axial angeordneten stromabwärtigen Ende (13.4) aufweist, und wobei die Venturi-Ansaugöffnung (30.3) Luft oder Wasser ansaugt.

7. Meeresströmungsturbine (1) zur Umwandlung der Energie von Wasserströmungen, umfassend zwei oder mehr Schaufelelemente für eine Meeresströmungsturbine (10.0) nach einem der Ansprüche 1 bis 6, ferner mit den folgenden Merkmalen: ein Hauptrahmen (0.0), der dazu vorgesehen ist, teilweise oder vollständig in einer Wasserströmung (F) im Meer oder in einem Fluss eingetaucht zu sein, wobei der Hauptrahmen (0.0) einen Bugbereich (PB) umfasst, der dazu angepasst ist, direkt gegen die Wasserströmung (F) ausgerichtet zu sein, steuerbord- und backbordseitige endlose Umlaufketten (4.1, 4.2) mit Schaufelelementen (10), die dazu vorgesehen sind, im Bugbereich (PB) erfasst und durch die Wasserströmung (F) nach hinten bewegt zu werden, wobei die Umlaufkette (4) umläuft und im Eingriff mit einem oder mehreren angetriebenen Rädern (5) einen Generator (G) antreibt, sowie kontinuierlich konvexe Steuerbord- und Backbordseitenrahmen (SS, PS), die sich vom Bugbereich (PB) bis zu einem quer verlaufenden oder spitz zulaufenden Heckbereich (PA) erstrecken, der schmaler ist als der maximale Abstand zwischen den Steuerbord- und Backbordseitenrahmen (SS, PS), wobei jede der endlosen Umlaufketten (4.1, 4.2) mit den Schaufelelementen (10) versehen ist, die dazu vorgesehen sind, entlang der Steuerbord-und Backbordseitenrahmen (SS, PS) zu laufen.

8. Meeresströmungsturbine (1) nach Anspruch 7, wobei die endlosen Umlaufketten (4.1, 4.2) durch eine steuerbord- und eine backbordseitige Führungsschiene (5.1, 5.2) an den Steuerbord- und Backbordseiten des Hauptrahmens (0.0) abgestützt werden, derart, dass die Schaufelelemente (10.0) durch die Wasserströmung (F) entlang des Hauptrahmens (0.0) nach hinten bewegt werden.

9. Meeresströmungsturbine (1) nach einem der Ansprüche 7 oder 8, wobei der Hauptrahmen (0.0) mindestens eine vertikale Backbord-Bugleitschaufel (8.1) und mindestens eine vertikale Steuerbord-Bugleitschaufel (8.2) mit Tragflächenprofilen umfasst, und wobei die Querschnittsform mit ihrer konvexen Hauptfläche nach außen vom Bugbereich (PB) angeordnet ist und ihr Hinterende stromabwärts zu den jeweiligen steuerbord- und backbordseitigen endlosen Umlaufketten (4.1, 4.2) angeordnet ist.

10. Meeresströmungsturbine (1) nach einem der Ansprüche 7, 8 oder 9, wobei auf jeder der steuerbord- und backbordseitigen endlosen Umlaufketten (4.1, 4.2) mindestens drei Schaufelelemente (10) hintereinander angeordnet sind.

## Revendications

1. Pale pour courant océanique (10) comprenant les caractéristiques suivantes : un canal d'entrée disposé axialement (11.0) ayant un axe central (A) et disposé de manière à être orienté vers l'amont avec une ouverture amont du canal (11.1) dans son état de fonctionnement, et au moins une aube disposée axialement (12.0), avec une ouverture amont d'aube (12.1) disposée à l'intérieur d'une ouverture aval du canal (11.2), un corps principal disposé axialement (13.0) ayant une surface amont (13.1), disposée à l'intérieur d'une ouverture aval d'aube (12.2), et comportant une section à symétrie de révolution (13.2) présentant une ou plusieurs surfaces convexes (13.3) s'étendant depuis la surface amont (13.1) au-delà de l'ouverture aval d'aube (12.2) vers une extrémité aval disposée axialement (13.4) du corps principal disposé axialement (13.0), **caractérisée en ce que** la pale pour courant océanique est destinée à être utilisée dans une turbine à courant océanique (1).

2. Pale pour courant océanique (10) selon la revendication 1, comprenant les caractéristiques suivantes ; dans laquelle le canal d'entrée disposé axialement (11.0) comprend une manche d'entrée disposée axialement, et dans laquelle ladite au moins une aube disposée axialement (12.0) comprend une manche d'aube, et dans laquelle le corps principal disposé axialement (13.0) comprend une surface amont circulaire.

3. Pale pour courant océanique (10) selon la revendication 1, comprenant les caractéristiques suivantes ; dans laquelle le canal d'entrée disposé axialement (11.0) comprend au moins deux surfaces latérales disposées par paires symétriquement par rapport à l'axe central (A) et latéralement au corps principal disposé axialement (13.0), et dans laquelle le corps principal disposé axialement (13.0) comprend une surface amont rectangulaire.

4. Pale pour courant océanique (10) selon l'une quelconque des revendications 1, 2 ou 3, dans laquelle ladite au moins une aube disposée axialement (12.0) présente une forme en section transversale semblable à un profil aérodynamique, et ladite forme en section transversale est disposée avec sa surface principale convexe (12.3) orientée vers l'extérieur par rapport à l'axe central (A) et avec son bord de fuite (12.4) disposé au niveau de l'ouverture aval d'aube (12.2).

5. Pale pour courant océanique (10) selon l'une quelconque des revendications précédentes, dans laquelle ladite au moins une aube disposée axialement (12.0) est disposée avec une ouverture en fente en regard du corps principal disposé axialement (13.0).

6. Pale pour courant océanique (10) selon l'une quelconque des revendications précédentes, dans laquelle un ou plusieurs éjecteurs Venturi (30.0) sont disposés axialement dans le corps principal (13.0), de telle sorte qu'une buse Venturi (30.1) possède une entrée dans la surface amont (13.1) et qu'un diffuseur Venturi (30.2) possède une sortie dans l'extrémité aval disposée axialement (13.4), et dans laquelle l'admission Venturi (30.3) aspire de l'air ou de l'eau.

7. Turbine à courant océanique (1) destinée à convertir l'énergie des courants d'eau, comprenant deux ou plusieurs pales pour courant océanique (10.0) selon l'une quelconque des revendications 1 à 6, comprenant en outre les caractéristiques suivantes : un châssis principal (0.0) destiné à être partiellement ou totalement immergé dans un écoulement d'eau (F) en mer ou dans une rivière, dans lequel le châssis principal (0.0) comprend une section d'étrave (PB) adaptée à être orientée directement contre l'écoulement d'eau (F), des chaînes de rotation sans fin tribord et bâbord (4.1, 4.2) munies de pales pour courant océanique (10) destinées à être captées au niveau de la section d'étrave (PB) et entraînées vers l'arrière par l'écoulement d'eau (F), dans lequel la chaîne de rotation (4) tourne et entraîne, en prise avec une ou plusieurs roues entraînées (5), un générateur (G), ainsi que des cadres latéraux bâbord et tribord (PS, SS) continuellement convexes qui s'étendent depuis la section d'étrave (PB) jusqu'à une section arrière transversale ou pointue (PA), plus étroite que la distance maximale entre les cadres latéraux bâbord et tribord (PS, SS), dans lequel chacune des chaînes de rotation sans fin (4.1, 4.2) est munie des pales pour courant océanique (10), adaptées à se déplacer le long des cadres latéraux bâbord et tribord (PS, SS).

8. Turbine à courant océanique (1) selon la revendication 7, dans laquelle les chaînes de rotation sans fin (4.1, 4.2) sont supportées par un rail de rotation tribord et un rail de rotation bâbord (5.1, 5.2) sur les côtés tribord et bâbord du châssis principal (0.0), de telle sorte que les pales pour courant océanique (10.0) sont entraînées vers l'arrière par l'écoulement d'eau (F) le long du châssis principal (0.0).

9. Turbine à courant océanique (1) selon l'une quelconque des revendications 7 ou 8, dans laquelle le châssis principal (0.0) comprend au moins une aube d'étrave verticale bâbord (8.1) et au moins une aube d'étrave verticale tribord (8.2) disposées avec des profils aérodynamiques, et dans laquelle la forme en section transversale est disposée avec sa surface principale convexe orientée vers l'extérieur à partir de la section d'étrave (PB) et son bord de fuite disposé vers l'aval en direction des chaînes de rotation sans fin tribord et bâbord respectives (4.1, 4.2).

10. Turbine à courant océanique (1) selon l'une quelconque des revendications 7, 8 ou 9, dans laquelle il y a au moins trois pales pour courant océanique (10) alignées sur chacune des chaînes de rotation sans fin tribord et bâbord (4.1, 4.2).
